# FASCICULE DE BREVET EUROPEEN

(11) **EP 1 745 309 B1**
(45) Date de publication et mention de la délivrance du brevet: **11.07.2007**
(21) Numéro de dépôt: 05747775.4
(22) Date de dépôt: 10.05.2005
(51) Int. Cl.: G01S 7/495, H01S 5/022, F41G 7/22, H01S 3/02

(54) **SYSTEME DE PROTECTION ANTI-MISSILE D'UN AERONEF**
FLUGZEUG-ANTIRAKETEN-SCHUTZSYSTEM
AIRCRAFT ANTI-MISSILE PROTECTION SYSTEM

(30) Priorité: 11.05.2004 FR 0405087
(43) Date de publication de la demande: 24.01.2007
(73) Titulaire: THALES, 92200 Neuilly sur Seine (FR)
(72) Inventeur: MOREAU, Dominique, MARKS & CLERK FRANCE, 94117 ARCUEIL Cedex (FR)
(74) Mandataire: Henriot, Marie-Pierre
(86) Numéro de dépôt international: PCT/EP2005/052111
(87) Numéro de publication internationale: WO 2005/109031

(56) Documents cités:
- FR-A- 2 689 252
- FR-A- 2 769 990
- US-A- 5 600 434
- US-A- 5 742 384
- US-A1- 2002 097 390

## Description

La présente invention concerne un système de protection anti-missile d'un aéronef, et s'applique notamment à la protection des avions civils et militaires, et à celle des hélicoptères, contre les tirs de missiles sol-air équipés d'autodirecteurs.

Ces dernières années, il est apparu que les avions civils pouvaient aussi faire l'objet d'attaque, par exemple par des groupes terroristes équipés de missiles portables sol-air existants en grand nombre suite aux derniers conflits dans le monde. Il devient donc nécessaire de protéger ces avions contre ces menaces. Les avions civils, décollant d'aéroports pouvant être situés en ville, nécessitent des moyens d'autoprotection sophistiqués qui doivent répondre à certains critères dont en particulier, une couverture de l'espace de 2π stéradians autour de l'appareil (l'avion étant vulnérable au sol et en vol), pas de modification de la traînée aérodynamique, un poids et un encombrement faible, une garantie de sécurité vis à vis des personnes, un faible coût.

Les équipements utilisés aujourd'hui pour assurer des missions d'autoprotection contre les tirs de missiles comportent de façon connue une caméra infrarouge qui, une fois qu'un missile est détecté, par exemple par un détecteur ultra-violet et/ou un radar, repère le missile grâce à sa flamme de combustion et/ou sa signature radar. La poursuite est assurée par l'émission d'un faisceau laser, dont l'orientation est assurée par un dispositif d'orientation de la ligne de visée, associé à un détecteur laser de type détecteur 4 cadrans, qui détecte le flux laser réfléchi par l'optique de l'autodirecteur du missile, grâce à l'effet dit « oeil de chat ». Le laser, dit laser de brouillage, envoie alors un signal adapté au mode de fonctionnement de l'autodirecteur du missile (modulation de fréquence ou modulation d'amplitude) sur l'optique de celui-ci afin de le leurrer. Un tel système est connu de US 5 742 384.

Cependant, l'architecture de ces équipements adaptés à des porteurs militaires est coûteuse et lourde, et la traînée aérodynamique générée est totalement incompatible des besoins civils, sauf à les rendre escamotables ce qui pénaliserait encore plus les bilans de masse et donc la charge utile pour ces mêmes avions.

La présente invention permet de remédier aux inconvénients précités en proposant un système de protection antimissile avec un module optronique d'encombrement réduit, permettant de s'adapter aux contraintes des avions civils.

Plus précisément, l'invention propose un système de protection anti-missile d'un aéronef caractérisé en ce qu'il comprend au moins un module optronique, chaque module étant équipé d'un dispositif de détection et de poursuite de missiles dans un espace donné, avec notamment une tête d'émission d'un faisceau laser de brouillage de missiles, et pour chaque module optronique un coffret de servitude pour le pilotage et l'alimentation électrique du module, chaque coffret étant déporté du module optronique qu'il pilote et comprenant en outre l'électronique de pilotage du laser de brouillage dudit module.

Selon l'invention, il est possible grâce à l'architecture particulière du système de protection, de positionner sur un même porteur plusieurs modules optroniques, permettant d'assurer une couverture complète de l'espace de surveillance.

D'autres avantages et caractéristiques apparaîtront plus clairement à la lecture de la description qui suit, illustrée par les figures annexées qui représentent :
- Les figures 1A à 1D, les vues montrant les enveloppes extérieures respectivement d'un module optronique et de son coffret de servitude d'un système de protection selon un exemple de réalisation ;
- Les figures 2A à 2C, des exemples d'architecture pour des modules optroniques du système selon l'invention ;
- La figure 3, un exemple d'implantation d'un système de surveillance selon l'invention sur un aéronef de type porteur civil ;
- Les figures 4A et 4B, deux modules optroniques d'un système de protection selon l'invention, montés tête bêche ;
- La figure 5, un exemple de réalisation d'un module optronique du système selon l'invention (vue partielle), selon une variante.

Sur les figures, les éléments identiques sont indexés par les mêmes repères.

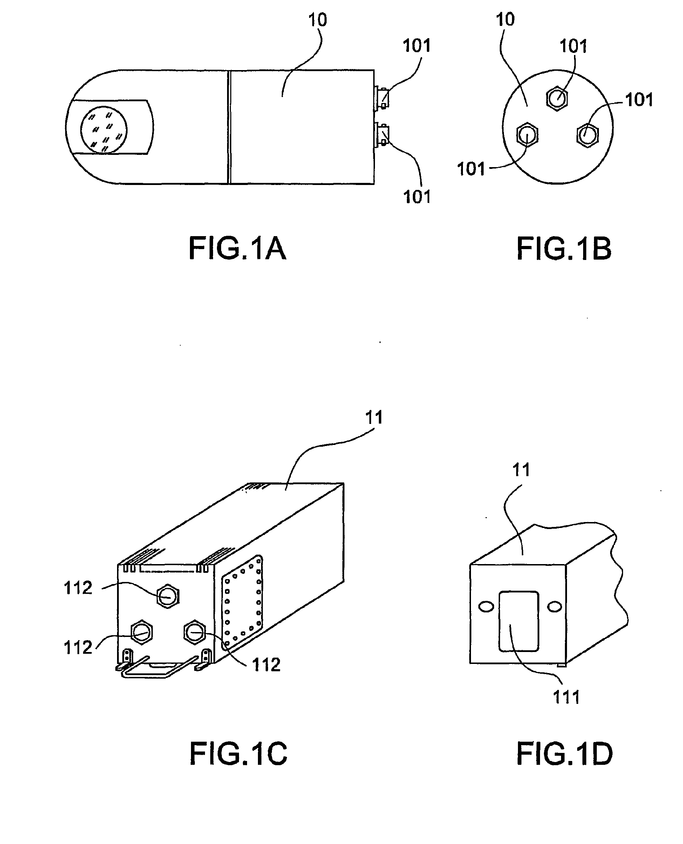

Les figures 1A à 1 D représentent des vues des enveloppes extérieures respectivement d'un module optronique 10 (figures 1A, 1B) et de son coffret de servitude 11 (figures 1C, 1D) dans un système de protection anti-missile selon l'invention, dans un exemple de réalisation. Le système de protection anti-missile selon l'invention prévoit au moins un module optronique implanté sur l'aéronef, chaque module étant équipé d'un dispositif de détection et de poursuite de missiles dans un espace de surveillance donné, avec notamment une tête d'émission d'un faisceau laser de brouillage, et pour chaque module optronique un coffret de servitude pour le pilotage et l'alimentation électrique du module. Le laser de brouillage participe dans un premier temps au repérage et à la poursuite du missile par visée de son autodirecteur, puis sert au brouillage proprement dit, grâce à l'envoi d'impulsions d'énergie suffisantes pour leurrer l'autodirecteur du missile. Selon l'invention, chaque coffret 11 est déporté du module optronique 10 qu'il pilote, relié électriquement au module par un câble ou tout autre moyen de transmission de l'énergie électrique. Le coffret de servitude comprend les alimentations électriques des éléments optroniques du module optronique, l'électronique de traitement des signaux délivrés par les détecteurs du module optronique, le calculateur, les interfaces avec le porteur. Selon l'invention, il comprend en outre l'électronique de pilotage du laser de brouillage du module 10, comprenant notamment l'alimentation et l'électronique de traitement et de servitude du laser. Cette architecture particulière, dans laquelle le coffret de servitude est déporté du module optronique, c'est-à-dire dans laquelle les deux éléments sont désolidarisés mécaniquement et peuvent donc être fixés indépendamment l'un de l'autre sur l'aéronef, le pilotage électronique du laser étant intégré dans le coffret de servitude, permet de réduire considérablement le poids et l'encombrement du module optronique. Sur un aéronef de type hélicoptère, un système de surveillance à un seul module optronique pourra être prévu, ledit module étant positionné sous l'hélicoptère. Dans le cas de porteurs de type avions civils ou militaires, le système de surveillance selon l'invention permet la mise en oeuvre de plusieurs modules optroniques, par exemple deux ou trois, pour avoir une couverture complète de l'espace de surveillance.

Selon une variante, la cavité laser, le module de pompage et l'amplificateur du laser de brouillage sont également déportés du module optronique 10, dans un coffret laser séparé ou dans le coffret de servitude lui-même. Seule la tête d'émission laser, formée par exemple d'un module de conversion de fréquence de type Oscillateur Paramétrique Optique, est maintenue dans le module optronique, permettant d'en réduire encore le poids et l'encombrement. Dans ce cas, le faisceau issu de l'amplificateur laser est transporté vers la tête d'émission laser du module optronique par un moyen de transport optique de type fibre optique. Cette configuration permet d'avoir un module optronique limité à son encombrement minimal, qui pourra être positionné sur l'aéronef à des emplacements jusque là inaccessibles mais pourtant stratégiques du point de vue de la protection anti-missiles de l'avion, tels que par exemple le haut de dérive de l'avion. Dans ce cas, le coffret de servitude et le coffret laser seront par exemple déportés en bas de dérive.

Le système de protection anti-missiles selon l'invention, du fait du gain en encombrement qu'il procure, permet également la mise en oeuvre d'un système de protection perfectionné dans lequel en plus du laser de brouillage est prévu un laser de destruction, seule la tête d'émission dudit laser se trouvant dans le module optronique. Cette fonctionnalité est très importante pour la sécurité vis-à-vis des personnes. En effet, si le système de poursuite du missile continue à détecter la présence de celui-ci malgré le tir d'impulsions laser de brouillage, le laser de destruction pourra alors être dirigé sur l'autodirecteur du missile, afin de procéder à la destruction de l'autodirecteur.

Les figures 1A et 1B représentent ainsi respectivement les vues de profil et de derrière de l'enveloppe extérieure d'un module optronique 10, équipé de connecteurs pour la connexion au coffret de servitude. L'enveloppe d'un exemple de coffret de servitude est représentée sur les figures 1C et 1D. Sur la figure 1D (face de derrière) est schématisé le connecteur 111 qui recevra les connexions issues des connecteurs 101 du module optronique. Sur la figure 1C, face de devant, les connecteurs 112 sont destinés à la connexion vers le porteur.

Selon une variante, le système de protection peut comprendre un seul coffret de servitude du type de celui représenté sur les figures 1C et 1 D pour le pilotage et l'alimentation de l'ensemble des modules optroniques. Dans ce cas, le coffret comprend par exemple une alimentation laser partagée permettant d'alimenter le laser de brouillage de l'un ou l'autre des modules, alternativement et une alimentation laser permettant d'alimenter le laser de destruction de l'un ou l'autre des modules, si un tel laser est prévu.

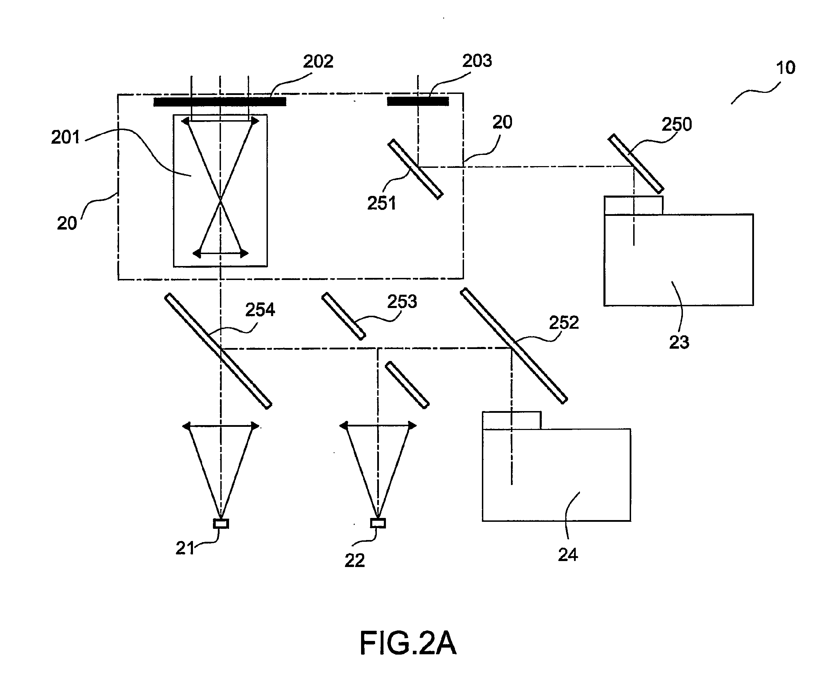

Les figures 2A à 2C décrivent schématiquement deux exemples d'architecture pour des modules optroniques 10 du système selon l'invention.

Le module optronique comprend dans l'exemple de la figure 2A un dispositif de détection et de poursuite avec un détecteur d'imagerie infrarouge 21, un détecteur laser 22 pour la poursuite du missile, de type détecteur 4 cadrans, une tête d'émission d'un laser de brouillage 23, une tête d'émission d'un laser de destruction 24 et un dispositif 20 d'orientation de la ligne de visée commun aux détecteurs et aux têtes d'émission des lasers de brouillage et de destruction. Dans cet exemple, le dispositif 20 comprend un objectif afocal 201 pour la poursuite de missiles, associé à un premier hublot 202 adapté à la bande spectrale du détecteur infrarouge 21, ledit objectif et ledit hublot étant montés sur une structure mécanique mobile en site et en gisement. Un jeu de miroirs (250 à 254), dont par exemple trois miroirs fixes (251, 252, 254) et deux miroirs à stabilisation fine (250, 253) assurent les renvois vers les détecteurs et l'orientation des faisceaux laser vers le dispositif d'orientation. Dans cet exemple, le dispositif d'orientation de la ligne de visée comprend un second hublot 203, monté sur la structure de support de l'objectif de poursuite, et adapté à la longueur d'onde du laser de brouillage 23. Le coffret de servitude comprenant notamment les alimentations des lasers n'est pas représenté sur cette figure.

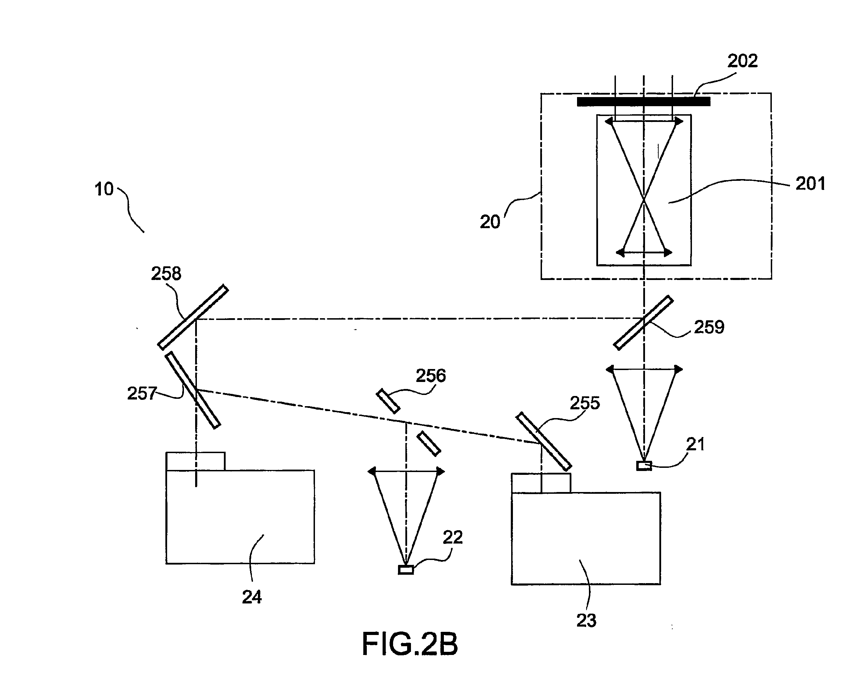

Selon une variante représentée sur la figure 2B, la structure mécanique ne comprend qu'un seul hublot (202) à bande spectrale adaptée, le jeu des miroirs (255 à 259) étant agencé pour que le faisceau laser de brouillage sorte du module optronique par cet unique hublot.

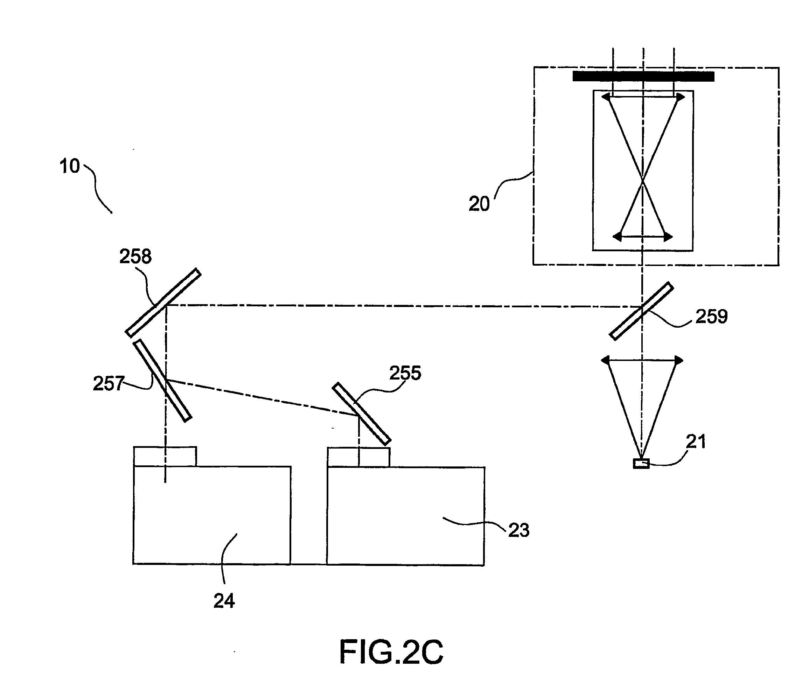

Selon une variante représentée sur la figure 2C, le détecteur d'imagerie infrarouge est également le détecteur laser pour la poursuite du missile, il n'y a donc pas de détecteur spécifique de type quatre cadrans comme dans l'exemple de la figure 2A ou 2B, ce qui permet de réduire encore l'encombrement du module et le coût du système.

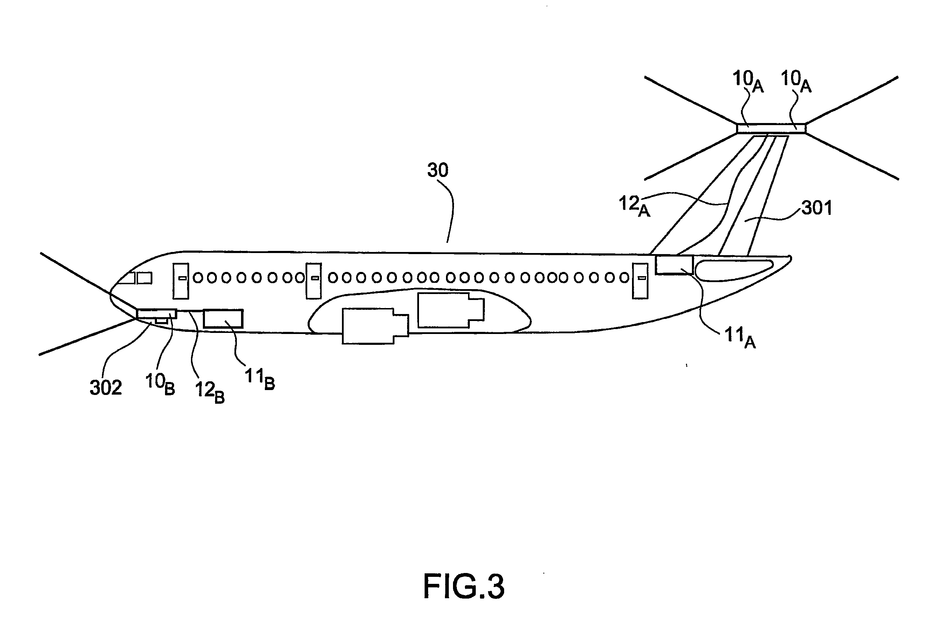

La figure 3 représente un exemple d'implantation d'un système de surveillance selon l'invention sur un aéronef 30 de type porteur civil. Dans cet exemple, le système de protection comprend trois modules optroniques, ce qui permet d'assurer une couverture maximale de l'espace de surveillance. Deux modules optroniques 10_{A} sont positionnés tête bêche en haut de la dérive 301 du porteur, et sont reliés par une liaison 12_{A} à un coffret de servitude 11_{A} commun aux deux modules. La liaison est électrique et optique dans le cas où la cavité laser et l'amplificateur laser seraient également déportés du module optronique. Un troisième module optronique 10_{B} est dans cet exemple prévu en dessous de la pointe avant 302 du porteur, permettant de couvrir l'espace de surveillance en dessous de l'avion.

Bien que deux modules optroniques soient déjà intéressants pour assurer une bonne couverture de l'espace de surveillance, il est avantageux d'en agencer trois sur l'aéronef, de telle sorte à assurer une protection dans un espace de 2π stéradians.

Selon une variante (telle qu'elle est illustrée par exemple sur la figure 3), il peut être intéressant de positionner deux modules optroniques tête bêche pour la surveillance de deux demi-espaces complémentaires. Dans ce cas, la tête d'émission du faisceau laser de brouillage peut être commune aux deux modules optroniques, ainsi que la tête d'émission du faisceau laser de destruction si celle-ci est prévue. On aura alors par exemple deux modules tête bêche en haut de dérive et un troisième module en dessous de la pointe avant de l'aéronef, ou deux modules tête bêche sous forme d'une nacelle en emport externe et un troisième module sur le dessus du fuselage. D'autres configurations sont bien entendu possibles pour le système de protection selon l'invention, comme par exemple de prévoir 3 modules distincts, deux de chaque côté de l'avion sur l'arrière du fuselage et un sur le dessus du fuselage, l'essentiel étant qu'un espace maximal de protection soit couvert, tout en respectant les limites de poids et d'augmentation de la traînée aérodynamique acceptables dans chaque cas.

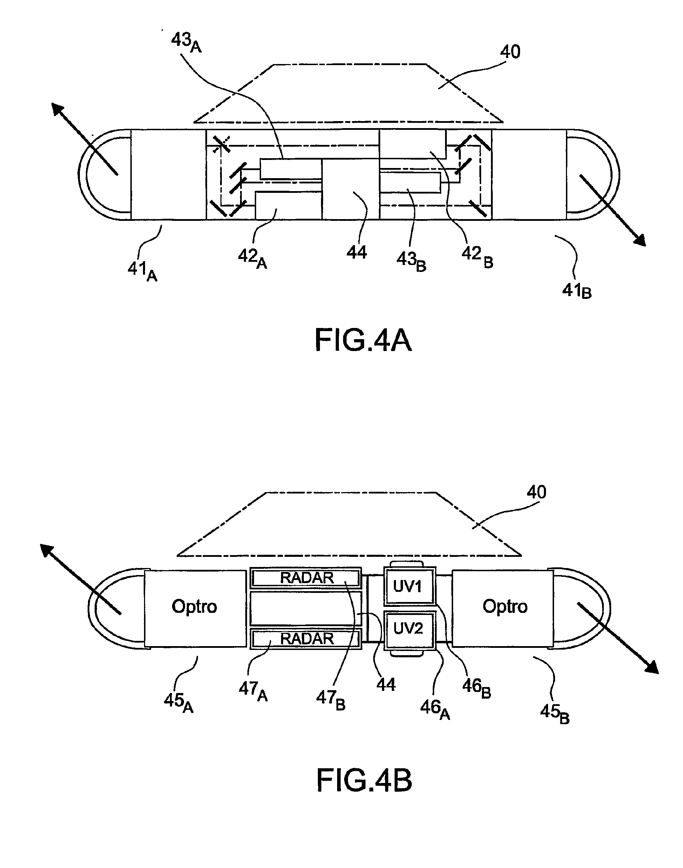

La figure 4A représente l'agencement de deux modules optroniques tête bêche dans un système de surveillance selon l'invention. Selon cet exemple, les deux modules optroniques sont destinés à être montés sous forme d'une nacelle en emport externe à l'avion, par exemple au moyen d'un pylône 40. Chaque module optronique comprend une pointe avant 41_{A}, 41_{B} avec le dispositif d'orientation de la ligne de visée, les détecteurs infrarouge (respectivement 42_{A} et 42_{B}) et de poursuite laser (respectivement 43_{A} et 43_{B}), et une tête d'émission 44 d'un faisceau laser de brouillage qui, dans cet exemple, est commune aux deux modules optroniques. Le coffret de servitude des modules optroniques est par exemple déporté en fuselage de l'aéronef. Une tête d'émission d'un faisceau laser de destruction peut également être prévue (non représentée).

La figure 4B montre une variante selon laquelle chaque module optronique comprend en outre un dispositif de détection ultra-violet (46_{A} et 46_{B}) et/ou un dispositif de détection radar des missiles (47_{A} et 47_{B}), lesdits dispositifs étant positionnés dans une tranche additionnelle entre les deux dits modules optroniques.

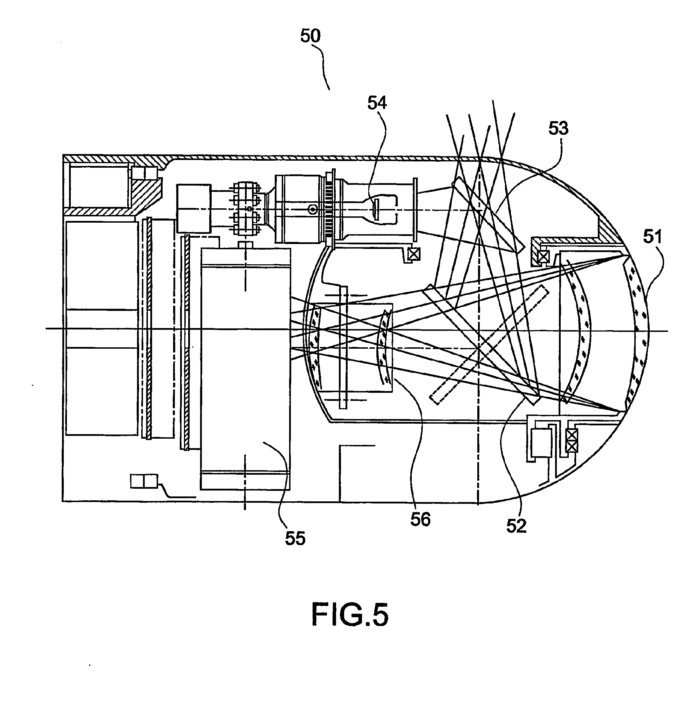

La figure 5 illustre un exemple particulier de réalisation d'un module optronique 50 particulièrement intéressant du fait de sa compacité. Seule la tête d'émission laser n'est pas représentée. Le module optronique comprend notamment un dispositif d'orientation de ligne de visée avec une structure mécanique mobile en site et en gisement supportant un objectif afocal de poursuite 51 (qui dans cet exemple fait aussi fonction de hublot). Le dispositif d'orientation de la ligne de visée comprend en outre un jeu de miroirs de renvoi dont au moins un miroir de renvoi 52 vers le détecteur infrarouge 54. Un compresseur 55 permet le refroidissement du détecteur infrarouge 54. Selon cet exemple, le détecteur infrarouge 54 assure la fonction de poursuite laser, permettant de s'affranchir d'un détecteur spécifique supplémentaire.

Selon cette variante, une fonctionnalité supplémentaire est prévue pour le module optronique 50. Il s'agit d'une fonction FLIR (abréviation de l'expression anglo-saxonne « Forward Looking Infra-Red ») permettant d'offrir au système et en particulier au module implanté en dessous de la pointe avant de l'aéronef, une fonction d'aide à la navigation et à l'atterrissage au profit de l'équipage. Pour cela, un objectif spécifique 56 est prévu, inclus sur la même structure que l'objectif du système de poursuite, et rendu actif par rotation de 180° de la structure mécanique et par commutation de 90° du miroir 52. Cet objectif permet compte tenu du détecteur employé d'assurer un champ optique compatible de ces fonctions. A noter que ce champ est adressable en site et gisement via le dispositif d'orientation de la ligne de visée, ce qui est particulièrement intéressant lors des phases d'atterrissage sous incidence forte et dérapage de l'aéronef.

## Revendications

1. Système de protection anti-missile d'un aéronef comprenant au moins un module optronique (10, 10_{A}, 10_{B}), chaque module étant équipé d'un dispositif de détection et de poursuite de missiles dans un espace donné, avec notamment une tête d'émission (23, 44) d'un faisceau laser de brouillage de missiles, et pour chaque module optronique un coffret de servitude (11, 11_{A}, 11_{B}) pour le pilotage et l'alimentation électrique du module, **caractérisé en ce que** chaque coffret étant déporté du module optronique qu'il pilote et comprenant en outre l'électronique de pilotage du laser de brouillage dudit module, et dans lequel chaque laser comprenant en plus de la tête d'émission du faisceau laser une cavité laser et un amplificateur laser, lesdits cavité laser et amplificateur sont déportés du module optronique comprenant la tête d'émission laser.

2. Système de protection selon la revendication 1, dans lequel chaque module optronique comprend en outre une tête d'émission (24) d'un faisceau laser de destruction de missiles, chaque coffret de servitude comprenant en outre l'électronique de pilotage du laser de destruction du module qu'il pilote.

3. Système de protection selon l'une des revendications précédentes, dans lequel lesdits cavité laser et amplificateur sont positionnés dans le coffret de servitude pour le pilotage dudit module.

4. Système de protection selon l'une des revendications précédentes, dans lequel la tête d'émission comprend un module de conversion de fréquence.

5. Système de protection selon l'une des revendications précédentes, dans lequel le dispositif de détection et de poursuite de missiles de chaque module optronique comprend un détecteur d'imagerie infrarouge (21, 54), un détecteur laser (22) pour la poursuite du missile et un dispositif d'orientation de la ligne de visée (20) commun auxdits détecteurs et à la tête d'émission du laser de brouillage.

6. Système de protection selon la revendication 5, dans lequel chaque module optronique comprenant en outre une tête d'émission d'un faisceau laser de destruction de missiles, ledit dispositif d'orientation de ligne de visée est commun auxdits détecteurs, à la tête d'émission du laser de brouillage et à celle du laser de destruction.

7. Système de protection selon l'une des revendications 5 ou 6, dans lequel le détecteur d'imagerie infrarouge (54) est aussi le détecteur laser pour la poursuite du missile.

8. Système de protection selon l'une des revendications 5 à 7, dans lequel le dispositif d'orientation de la ligne de visée comprend notamment un objectif de poursuite (51), mobile en site et en gisement, et un jeu de miroirs de renvoi dont au moins un miroir de renvoi (52) vers le détecteur infrarouge (54).

9. Système de protection selon la revendication 8, dans lequel le dispositif d'orientation de la ligne de visée comprend un objectif spécifique (56), monté sur une même structure de support de l'objectif de poursuite (51), et étant rendu actif par rotation de 180° de ladite structure et commutation de 90° du miroir de renvoi (52) vers le détecteur infrarouge, pour offrir au système une fonction spécifique d'aide à la navigation et à l'atterrissage.

10. Système de protection selon l'une des revendications précédentes, comprenant au moins deux modules optroniques et un seul coffret de servitude pour le pilotage et l'alimentation d'au moins deux desdits modules optroniques.

11. Système de protection selon l'une des revendications précédentes, comprenant trois modules optroniques (10_{A}, 10_{B}) positionnés de telle sorte à assurer une protection dans un espace de 2 stéradians.

12. Système de protection selon l'une des revendications précédentes, comprenant au moins deux modules optroniques, deux desdits modules optroniques étant positionnés tête bêche pour la surveillance de deux demi-espaces complémentaires.

13. Système de protection selon la revendication 12, dans lequel la tête d'émission (44) du faisceau laser de brouillage est commune aux deux dits modules optroniques.

14. Système de protection selon l'une des revendications 12 ou 13, dans lequel chaque module optronique comprenant en outre une tête d'émission d'un faisceau laser de destruction de missiles, la tête d'émission du faisceau laser de destruction est commune aux deux dits modules optroniques.

15. Système de protection selon l'une des revendications 12 à 14, dans lequel chaque module optronique comprenant en outre un dispositif de détection ultra-violet (46_{A}, 46_{B}) et/ou un dispositif de détection radar (47_{A}, 47_{B}) des missiles, lesdits dispositifs sont positionnés dans une tranche additionnelle entre les deux dits modules optroniques.

16. Avion équipé d'un système de protection anti-missile selon l'une des revendications 12 à 15, les deux dits modules étant montés sous forme d'une nacelle en emport externe à l'avion.

17. Avion selon la revendication 16, dans lequel ledit système de protection anti-missile comprend un troisième module optronique positionné sur le dessus du fuselage de l'avion.

18. Avion équipé d'un système de protection anti-missile selon l'une des revendications 12 à 15, les deux dits modules (10_{A}) étant montés en haut de dérive (301) de l'avion.

19. Avion selon la revendication 18, dans lequel ledit système de protection anti-missile comprend un troisième module optronique (10_{B}) positionné sous la pointe avant (302) de l'avion.

## Claims

1. Anti-missile protection system for an aircraft, comprising at least one optoelectronic module (10, 10_{A}, 10_{B}), each module being equipped with a device for detecting and tracking missiles in a given space, with, in particular, a missile jamming laser beam emitting head (23, 44), and, for each optoelectronic module, a service box (11, 11_{A}, 11_{B}) for controlling and supplying power to the module, **characterized in that** each box being remote from the optoelectronic module that it controls and also comprising the electronics for controlling the jamming laser of said module, and in which, each laser comprises in addition to the laser beam emitting head, a laser cavity and a laser amplifier, said laser cavity and amplifier being remote from the optoelectronic module comprising the laser emitting head.

2. Protection system according to Claim 1, in which each optoelectronic module also comprises a missile destruction laser beam emitting head (24), each service box also comprising the electronics for controlling the destruction laser of the module that it controls.

3. Protection system according to either of the preceding claims, in which said laser cavity and amplifier are positioned in the service box for the control of said module.

4. Protection system according to one of the preceding claims, in which the emitting head comprises a frequency conversion module.

5. Protection system according to one of the preceding claims, in which the missile detection and tracking device of each optoelectronic module comprises an infrared imaging detector (21, 54), a laser detector (22) for tracking the missile and a line-of-sight orientation device (20) common to said detectors and to the jamming laser emitting head.

6. Protection system according to Claim 5, in which, each optoelectronic module also comprising a missile destruction laser beam emitting head, said line-of-sight orientation device is common to said detectors, to the emitting head of the jamming laser and to that of the destruction laser.

7. Protection system according to one of Claims 5 or 6, in which the infrared imaging detector (54) is also the laser detector for tracking the missile.

8. Protection system according to one of Claims 5 to 7, in which the line-of-sight orientation device comprises in particular a tracking lens (51), mobile elevation-wise and bearing-wise, and a set of return mirrors, including at least one return mirror (52) towards the infrared detector (54).

9. Protection system according to Claim 8, in which the line-of-sight orientation device comprises a specific lens (56), mounted on the same support structure as the tracking lens (51), and being made active by the 180° rotation of said structure and 90° switching of the return mirror (52) towards the infrared detector, to offer the system a specific navigation and landing aid function.

10. Protection system according to one of the preceding claims, comprising at least two optoelectronic modules and a single service box for the control and power supply of at least two of said optoelectronic modules.

11. Protection system according to one of the preceding claims, comprising three optoelectronic modules (10_{A}, 10_{B}) positioned so as to ensure a protection in a space of 2π steradians.

12. Protection system according to one of the preceding claims, comprising at least two optoelectronic modules, two of said optoelectronic modules being positioned nose-to-tail for the surveillance of two complementary half-spaces.

13. Protection system according to Claim 12, in which the jamming laser beam emitting head (44) is common to both of said optoelectronic modules.

14. Protection system according to one of Claims 12 or 13, in which, each optoelectronic module also comprising a missile destruction laser beam emitting head, the destruction laser beam emitting head is common to both said optoelectronic modules.

15. Protection system according to one of Claims 12 to 14, in which, each optoelectronic module also comprising an ultraviolet detection device (46_{A}, 46_{B}) and/or a radar detection device (47_{A}, 47_{B}) for the missiles, said devices are positioned in an additional block between the two of said optoelectronic modules.

16. Airplane equipped with an anti-missile protection system according to one of Claims 12 to 15, the two of said modules being mounted in the form of a pod supported outside the airplane.

17. Airplane according to Claim 16, in which said anti-missile protection system comprises a third optoelectronic module positioned on the top of the fuselage of the airplane.

18. Airplane equipped with an anti-missile protection system according to one of Claims 12 to 15, the two of said modules (10_{A}) being mounted at the top of the stabilizer (301) of the airplane.

19. Airplane according to Claim 18, in which said anti-missile protection system comprises a third optoelectronic module (10_{B}) positioned under the nose (302) of the airplane.

## Patentansprüche

1. Raketenabwehr-Schutzsystem eines Luftfahrzeugs, das mindestens ein optronisches Modul (10, 10_{A}, 10_{B}) aufweist, wobei jedes Modul mit einer Vorrichtung zur Erfassung und zur Verfolgung von Raketen in einem gegebenen Raum ausgestattet ist, mit insbesondere einem Sendekopf (23, 44) eines Laserstrahls zur Störung von Raketen, und für jedes optronische Modul einem Logistik-Kasten (11, 11_{A}, 11_{B}) zur Steuerung und Stromversorgung des Moduls, **dadurch gekennzeichnet, dass** jeder Kasten aus dem optronischen Modul, das er steuert, ausgelagert ist und außerdem die Steuerelektronik des Störlasers des Moduls enthält, und bei dem jeder Laser zusätzlich zum Sendekopf des Laserstrahls einen Laserhohlraum und einen Laserverstärker aufweist, wobei der Laserhohlraum und der Laserverstärker aus dem den Laser-Sendekopf enthaltenden optronischen Modul ausgelagert sind.

2. Schutzsystem nach Anspruch 1, bei dem jedes optronische Modul außerdem einen Sendekopf (24) eines Laserstrahls zur Zerstörung von Raketen aufweist, wobei jeder Logistik-Kasten außerdem die Steuerelektronik des Zerstörungslasers des Moduls aufweist, das er steuert.

3. Schutzsystem nach einem der vorhergehenden Ansprüche, bei dem der Laserhohlraum und der Laserverstärker im Logistik-Kasten für die Steuerung des Moduls positioniert sind.

4. Schutzsystem nach einem der vorhergehenden Ansprüche, bei dem der Sendekopf ein Frequenzumwandlungsmodul aufweist.

5. Schutzsystem nach einem der vorhergehenden Ansprüche, bei dem die Vorrichtung zur Erfassung und zur Verfolgung von Raketen jedes optronischen Moduls einen Infrarotbilderzeugungsdetektor (21, 54), einen Laserdetektor (22) zur Verfolgung der Rakete und eine Vorrichtung zur Ausrichtung der Visierlinie (20) aufweist, die den Detektoren und dem Sendekopf des Störlasers gemeinsam ist.

6. Schutzsystem nach Anspruch 5, bei dem, da jedes optronische Modul außerdem einen Sendekopf eines Laserstrahls zur Zerstörung von Raketen aufweist, die Vorrichtung zur Ausrichtung der Visierlinie den Detektoren, dem Sendekopf des Störlasers und demjenigen des Zerstörungslasers gemeinsam ist.

7. Schutzsystem nach einem der Ansprüche 5 oder 6, bei dem der Infrarotbilderzeugungsdetektor (54) auch der Laserdetektor zur Verfolgung der Rakete ist.

8. Schutzsystem nach einem der Ansprüche 5 bis 7, bei dem die Vorrichtung zur Ausrichtung der Visierlinie insbesondere ein Verfolgungsobjektiv (51), das in Höhen- und Seitenpeilung beweglich ist, und einen Satz von Umlenkspiegeln aufweist, darunter mindestens ein Umlenkspiegel (52) zum Infrarotdetektor (54).

9. Schutzsystem nach Anspruch 8, bei dem die Vorrichtung zur Ausrichtung der Visierlinie ein spezifisches Objektiv (56) aufweist, das auf den gleichen Trägeraufbau wie das Verfolgungsobjektiv (51) montiert ist und durch Drehung um 180° des Aufbaus und Umschaltung um 90° des Umlenkspiegels (52) zum Infrarotdetektor aktiviert wird, um dem System eine spezifische Funktion der Navigationshilfe und der Landehilfe zu bieten.

10. Schutzsystem nach einem der vorhergehenden Ansprüche, das mindestens zwei optronische Module und einen einzigen Logistik-Kasten für die Steuerung und die Stromversorgung von mindestens zwei der optronischen Module aufweist.

11. Schutzsystem nach einem der vorhergehenden Ansprüche, das drei optronische Module (10_{A}, 10_{B}) aufweist, die positioniert sind, um einen Schutz in einem Raum von 2 Steradianten zu gewährleisten.

12. Schutzsystem nach einem der vorhergehenden Ansprüche, das mindestens zwei optronische Module aufweist, wobei zwei der optronischen Module für die Überwachung von zwei komplementären Halbräumen Kopf bei Fuß positioniert sind.

13. Schutzsystem nach Anspruch 12, bei dem der Sendekopf (44) des Störlaserstrahls den zwei optronischen Modulen gemeinsam ist.

14. Schutzsystem nach einem der Ansprüche 12 oder 13, bei dem, da jedes optronische Modul außerdem einen Sendekopf eines Raketenzerstörungs-Laserstrahls aufweist, der Sendekopf des Zerstörungslaserstrahls den zwei optronischen Modulen gemeinsam ist.

15. Schutzsystem nach einem der Ansprüche 12 bis 14, bei dem, da jedes optronische Modul außerdem eine Vorrichtung zur Ultravioletterfassung (46_{A}, 46_{B}) und/oder eine Vorrichtung zur Radarerfassung (47_{A}, 47_{B}) der Raketen aufweist, die Vorrichtungen in einem zusätzlichen Abschnitt zwischen den zwei optronischen Modulen angeordnet sind.

16. Flugzeug, das mit einem Raketenabwehr-Schutzsystem nach einem der Ansprüche 12 bis 15 ausgestattet ist, wobei die zwei Module in Form einer Gondel außenbords am Flugzeug montiert sind.

17. Flugzeug nach Anspruch 16, bei dem das Raketenabwehr-Schutzsystem ein drittes optronisches Modul aufweist, das auf dem Rumpf des Flugzeugs angeordnet ist.

18. Flugzeug, das mit einem Raketenabwehr-Schutzsystem nach einem der Ansprüche 12 bis 15 ausgestattet ist, wobei die zwei Module (10_{A}) oben an der Heckflosse (301) des Flugzeugs montiert sind.

19. Flugzeug nach Anspruch 18, bei dem das Raketenabwehr-Schutzsystem ein drittes optronisches Modul (10_{B}) aufweist, das unter dem Vorderbug (302) des Flugzeugs angeordnet ist.
